# DEMANDE DE BREVET EUROPEEN

(11) **EP 0 631 939 A1**
(43) Date de publication de la demande: **04.01.1995**
(21) Numéro de dépôt: 94304751.4
(22) Date de dépôt: 29.06.1994
(51) Int. Cl.: B65D 6/18, B65D 65/40, B65D 5/42, B29C 53/06, B26D 3/06

(54) **Ceinture formée de plaques alvéolaires utilisation d'une telle ceinture et procédé de fabrication**

(30) Priorité: 02.07.1993 FR 9308140
(71) Demandeur: KAYSERSBERG PACKAGING S.A., F-92402 Courbevoie Cédex (FR)
(72) Inventeur: Maillot, Guillaume, F-68000 Colmar (FR); Heckly, Lucien, F-68240 Kientzheim (FR)
(74) Mandataire: Cline, Roger Ledlie

(57) **Abrégé**

La présente invention concerne une ceinture formée de plaques alvéolaires. l'utilisation d'une telle ceinture et le procédé de fabrication. La ceinture formée de plaques alvéolaires (1, 4) dont deux extrémités sont soudées entre elles, est caractérisée en ce que la ligne de soudure (9) est parallèle à la direction des entretoises (12, 22, 32, 42) et au moins quatre lignes de pliage (5, 6, 7, 8) formant charnière sont prévues pour constituer un parallèlogramme déformable.

## Description

La présente invention concerne une ceinture formée de plaques avéolaires, son utilisation et le procédé de fabrication.

Il est connu de former des caissons à base de plaques alvéolaires en polypropylène ou polyéthylèe ou autre polyoléfine dans lesquels l'assemblage des plaques pour former le parallélogramme du caisson est effectué par des découpes en mortaise réalisées aux deux extrémités de chaque plaque et les deux plaques sont associées par l'imbrication des découpes en mortaise et maintien par un axe qui est enfilé dans les vides entre les entretoises.

L'inconvénient de ce système d'assemblage de caissons est, d'une part sa rigidité qui ne permet pas un stockage dans peu de place et, d'autre part le fait que les découpes formées aux angles laissent passer la poussière ou laissent échapper les objets de petite taille contenus dans le caisson.

Un premier but de l'invention est donc de proposer une ceinture qui puisse être utilisée par la suite pour constituer des caissons. Cette ceinture doit être facilement transportable, de préférence sous forme pliée.

Ce but est atteint par le fait que la ceinture formée d'au moins une plaque alvéolaire dont deux extrémités sont soudées entre elles est caractérisée en ce que la ligne de soudure est parallèle à la direction des entretoises et au moins quatre lignes de pliage formant charnière sont prévues pour constituer un parallèlogramme déformable.

Selon une autre particularité, chaque charnière est obtenue en enlevant, par rapport à la direction des entretoises, au moins une entretoise et un nombre d'éléments de couverture supérieur d'une unité à celui des entretoises.

Selon une autre particularité, une deuxième ligne de soudure est disposée sur le côté situé à l'opposé de la première soudure et les soudures sont effectuées de façon à permettre un pliage à 180 degrés le long de la ligne de soudure pour former des soufflets.

Selon une autre particularité, la soudure est effectuée sur l'élément de plaque formant la surface extérieure de la ceinture, l'élément intérieur prévu à chaque extrémité du ruban étant enlevé.

Un autre but de l'invention est de proposer une utilisation de cette ceinture.

Ce but est atteint par le fait que cette ceinture est montée sur un cadre ou un socle formant la base du caisson de façon à constituer un volume parallélépipèdique.

Un dernier but de l'invention est de proposer un procédé de fabrication de la ceinture et, en particulier, des découpes nécessaires au pliage.

Ce but est atteint par le fait que, sur la ligne d'extrusion des plaques alvéolaires, un outil de découpe composé d'un support et d'un couteau en forme de U, est utilisé pour ôter les deux entretoises et les trois éléments de couvertures, le couteau étant associé à une pièce en forme de ski qui, en glissant sur le dessus de la plaque, permet de maintenir la découpe à une profondeur constante.

D'autres caractéristiques et avantages de la présente invention apparaîtront plus clairement à la lecture de la description ci-après faite en référence aux dessins annexés dans lesquels :
- la figure 1A représente une vue en perspective d'une ceinture obtenue selon l'invention dans sa forme déployée ;
- la figure 1B représente une vue en perspective d'une ceinture pliée en position de transport ;
- la figure 2A représente une vue en coupe d'une plaque alvéolaire dans laquelle on a supprimé des éléments pour former une charniére ;
- la figure 2B représente une vue en coup de cette même plaque après pliage à 90 degrés ;
- la figure 2C représente une vue en coupe de cette même plaque après pliage à 180 degrés ;
- la figure 2D représente une vue en coupe des deux extrémités de plaques qui sont associées pour former une ceinture et obtenir des lignes de pliage formant des soufflets ;
- la figure 3A représente une vue de côté du dispositif permettant la mise en oeuvre du procédé de fabrication de plaques pliables ;
- la figure 3B représente une vue de face du dispositif.

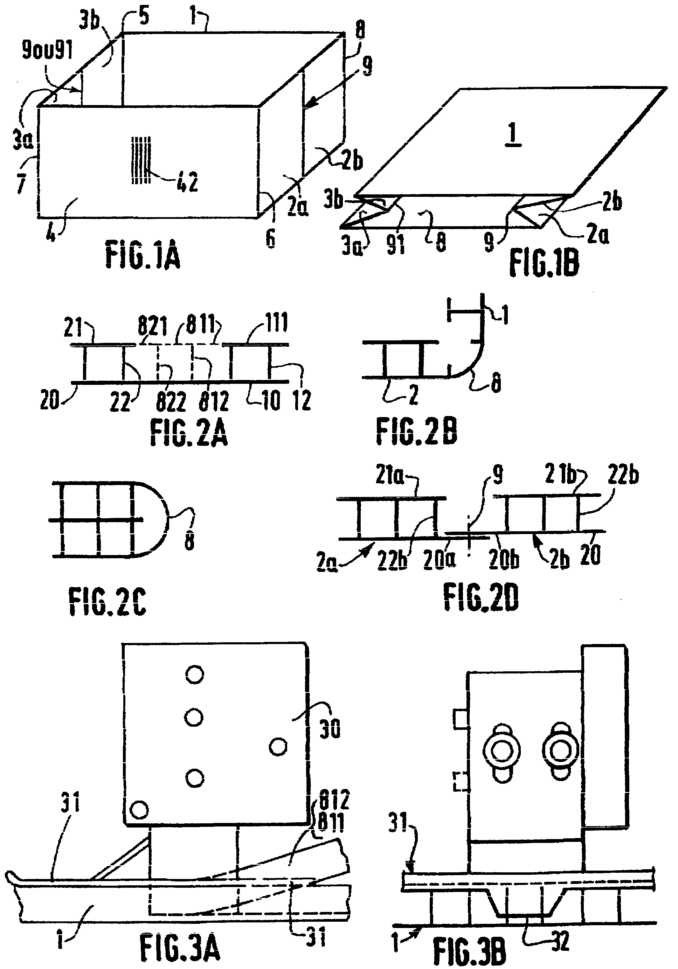

Une ceinture (1, 2, 3, 4), représentée sur les figures 1A et 1B est constituée d'une plaque alvéolaire, de préférence en polypropylène, polyéthylène ou autre polyoléfine, constituée de deux plaques (10, 11, figure 2A) reliées entre elles par des entretoises (12) de façon à former des alvéoles dont la direction longitudinale est, comme représentée à la figure 1A, parallèle aux angles de pliage (5, 6, 7, 8), la direction des entretoises étant représentée par les lignes striées (42).

Sur la variante de la figure 1A, deux bandes (1, 4) en matériau alvéolaire, plus connu chez KAYSERSBERG PACKAGING sous la marque "Akylux", sont associées pour former une ceinture. Une bande forme, un côté longitudinal (1) associé à deux demi-côtés latéraux (2b, 3b) et l'autre bande forme l'autre côté longitudinal (4) opposé au premier côté (1) et deux portions de côtés latéraux (2a, 3a) complémentaires. Ces deux rubans sont assemblés par deux soudures à ultrasons effectuées selon les lignes de pliage (9). Ces soudures à ultrasons sont effectuées sur les plaques extérieures (20), de façon à lier la plaque extérieure (20b) d'un demi-côté (2b) à la plaque extérieure (20a) de l'autre demi-côté (2a), les entretoises d'extrémité de la plaque ayant été supprimées pour dégager une portion de plaque extérieure (20) ne comportant ni entretoise (22), ni portion de plaque intérieure (21) en vis-à-vis. De cette façon, la soudure (9) constitue une ligne de pliage qui permet de rabattre à 180 degrés, l'un sur l'autre, les côtés extérieurs (20a, 20b) de façon à amener le demi-côté (20b) sur le demi-côté (20a). Il en sera de même pour la soudure (9) reliant les demi-côtés (3a) et (3b) pour former ainsi deux soufflets.

Les lignes de pliage ( 5, 6, 7, 8) constituent les charnières du parallélépipède représenté à la figure 1a. Ces lignes de pliage doivent permettre, d'une part, la constitution du parallélépipède par des pliages à 90 degrés et d'autre part la déformation pour écraser la ceinture et la plier en formant deux soufflets avec les côtés latéraux (2a, 2b ; 3a, 3b) de façon à déformer ces côtés en forme de soufflets et ramener le côté longitudinal (1) en vis-à-vis et au-dessus du côté longitudinal (4). Par conséquent, les lignes (5, 6, 7, 8, 9) doivent également être capables de se plier à 180 degrés. Pour ce faire, la partie de ruban constituant les portions (2b, 1, 3b) sera pourvue, au niveau des emplacements des lignes de pliage (8, 5), de deux évidements qui consistent à supprimer deux entretoises (812, 822) et trois éléments de couverture (821, 811), les trois éléments de couverture étant ceux adjacents aux deux entretoises (822, 812) supprimées. De cette façon, le ruban de plaque se trouve au niveau de la ligne de pliage (8), constitué seulement de la plaque extérieure (10), les deux entretoises (812, 822) et les trois éléments de couverture (821, 811) appartenant aux plaques intérieures (11, 21) ayant été supprimées.

Ceci permet, comme représenté à la figure 2B, un pliage à angle droit formant un arrondi et, comme représenté à la figure 2C, un pliage à 180 degrés en ramenant les plaques intérieures (11, 21) pour la ligne de pliage (8), et respectivement (11) et (31) pour la ligne de pliage (5), les unes sur les autres. De façon analogue, il sera procédé de la même manière pour la partie formée par les éléments (2a, 4, 3a). Si la ceinture est constituée de deux portions de ruban, elle comportera deux lignes de soudure (9) disposées approximativement au milieu des côtés latéraux (2, 3). Par contre on peut également constituer la ceinture avec une seule ligne de soudure (9) et une ligne de pliage (91). Dans ce cas, la ligne de pliage (91) sera obtenue en supprimant, aux environs du milieu de côté latéral, situé par exemple entre les deux lignes de pliage (5, 7), au moins un élément de couverture de la face intérieure (31) de façon à ce qu'au moins deux entretoises (32) de la plaque (3) ne soient pas reliées entre elles par un élément intermédiaire (31) sur la face intérieure.

Les figures 3A et 3B représentent le procédé de fabrication permettant d'enlever en sortie de la machine d'extrusion des plaques, les éléments superflus pour former les lignes de pliage (5, 6, 7, 8) aux endroits souhaités. Sur les figures 3 on n'a représenté qu'un seul poste mais il est bien évident que la machine peut comporter deux postes si les ceintures sont fabriquées par assemblage de deux rubans ou cinq postes correspondant à chaque ligne de pliage dans le cas où la machine est formée par un seul ruban dont les deux extrémités sont soudées l'une sur l'autre pour réaliser la ceinture.

Cette machine est constituée d'une tête (30) qui supporte à son extrémité inférieure un couteau (32) dont la lame est en forme de tronc de pyramide de façon à obtenir ainsi une découpe plus aisée, à la fois des deux entretoises qui doivent être supprimées et des éléments de couverture situés sur la face intérieure de la plaque alvéolaire (1). Le couteau (32) a, dans sa partie la plus étroite, une largeur correspondant au minimum à la distance entre deux entretoises et dans sa partie la plus large une largeur correspondant au maximum à la distance séparant l'extrémité des trois éléments de couverture adjacents aux deux entretoises qui doivent être découpés par la lame.

La machine comporte à proximité de la lame et en avant de celle-ci un patin ou ski (31) disposé transversalement au déplacement de la lame (32), ce ski (31) appuie en permanence sur la plaque (1) de façon à régler ainsi la profondeur de l'entaille effectuée par le couteau (32). De cette façon le couteau (32), au fur et à mesure que la plaque (1) se déplace sur la sortie de la ligne d'extrusion, va découper dans celle-ci les éléments nécessaires qui vont former les chutes (811, 812) et affaiblir à cet endroit la plaque alvéolaire pour permettre par la suite de constituer la charnière de la ceinture. A chaque charnière est associé un dispositif identique.

D'autres modifications à la portée de l'homme de métier font également partie de l'esprit de l'invention.

L'avantage de l'invention est de permettre la fabrication aisée de ceintures qui peuvent être ensuite associées avec des socles ou fonds pour former des caissons qui peuvent être gerbés. On constatera que le nombre d'entretoises à enlever est de préférence limité à deux dans le cas où l'écartement entre les entretoises est au moins égale à la distance entre les deux couvertures. En effet, si on enlève une entretoise supplémentaire la résistance au gerbage des caissons diminue. Si on enlève une seule entretoise on ne parvient pas à assurer un arrondi lors de la constitution du caisson et lors du pliage à plat on n'arrivera pas à plier complètement la ceinture.

## Revendications

**1)** Ceinture, formée d'au moins une plaque alvéolaire (1, 4) dont deux extrémités sont soudées entre elles, caractérisée en ce que la ligne de soudure (9) est parallèle à la direction des entretoises (12, 22, 32, 42) et au moins quatre lignes de pliage (5, 6, 7, 8) formant charnière sont prévues pour constituer un parallèlogramme déformable.

**2)** Ceinture, selon la revendication 1, caractérisée en ce que chaque charnière (5, 6, 7, 8) est obtenue en enlevant, par rapport à la direction des entretoises (12, 22, 32, 42), au moins une entretoise (822, 812) et un nombre d'éléments de couverture (821, 811) supérieur d'une unité à celui des entretoises.

**3)** Ceinture, selon la revendication 1 ou 2, caractérisée en ce qu'une deuxième ligne de soudure (9) est disposée sur le côté opposé (3) à la première soudure (9) et les soudures sont effectuées de façon à permettre un pliage à 180 degrés le long de la ligne de soudure pour former les soufflets.

**4)** Ceinture, selon la revendication 1 ou 3, caractérisée en ce que la soudure (9) est effectuée sur l'élément de plaque formant la surface extérieure (20, 30) de la ceinture, l'élément intérieur (21, 31) prévu à chaque extrémité du ruban étant enlevé.

**5)** Utilisation de la ceinture, selon une des revendications précédentes, caractérisée en ce que cette ceinture est montée sur un cadre ou un socle formant la base du caisson de façon à constituer un volume parallélépipèdique.

**6)** Procédé de fabrication de la ceinture, selon une des revendications précédentes, caractérisé en ce que, sur la ligne d'extrusion des plaques alvéolaires, un outil de découpe composé d'un support (30) et d'un couteau (32) en forme de U est utilisé pour ôter les deux extrémités et les trois éléments de couverture, le couteau (32) étant associé à un ski (31) qui, en glissant sur le dessus de la plaque (1), permet de maintenir la découpe à une profondeur constante.
